# EUROPÄISCHE PATENTSCHRIFT

(11) **EP 3 747 567 B1**
(45) Veröffentlichungstag und Bekanntmachung des Hinweises auf die Patenterteilung: **09.07.2025**
(21) Anmeldenummer: 20174493.5
(22) Anmeldetag: 13.05.2020
(51) Int. Cl.: B21D 31/02

(54) **VERFAHREN ZUM HERSTELLEN EINES LOCHBLECHES, LOCHBLECH, FORMTEIL UND AUFBEREITUNGSVORRICHTUNG**
METHOD FOR MANUFACTURING A PERFORATED PLATE, PERFORATED PLATE, MOULDING AND PROCESSING DEVICE
PROCÉDÉ DE FABRICATION D'UNE TÔLE PERFORÉE, TÔLE PERFORÉE, PIÈCE MOULÉE ET DISPOSITIF DE PRÉPARATION

(30) Priorität: 05.06.2019 DE 102019115174
(43) Veröffentlichungstag der Anmeldung: 09.12.2020
(73) Patentinhaber: Lübbers Anlagen- und Umwelttechnik GmbH, 99947 Bad Langensalza (DE)
(72) Erfinder: Lübbers, Matthias, 99947 Bad Langensalza (DE)
(74) Vertreter: Weidner Stern Jeschke

(56) Entgegenhaltungen:
- GB-A- 1 094 610
- US-A1- 2004 244 303
- US-A1- 2010 126 152

## Beschreibung

Die Erfindung betrifft ein Verfahren zum Herstellen eines Lochbleches, wobei das hergestellte Lochblech mindestens ein Loch aufweist. Des Weiteren betrifft die Erfindung ein Lochblech, ein Formteil und eine Aufbereitungsvorrichtung.

Lochbleche werden in unterschiedlicher Form und Funktion in industriellen Anwendungen eingesetzt. Beispielsweise werden Lochbleche zum Sieben, Klassieren, Filtern oder Dosieren verwendet. Hierbei wird ein Lochblech entweder direkt in eine Aufbereitungsanlage eingebaut, beispielsweise als Anströmboden in einer Fließbettanlage, oder als Halbzeug zunächst umgeformt, beispielsweise in ein zylindrisches Filterelement eines Wasserfilters.

In einem bekannten einfachen Herstellungsverfahren werden beispielsweise Lochbleche aus zu lochenden Tafeln oder Bändern mittels einer Breitpresse hergestellt, mit welcher in einem Hub eine gesamte Lochreihe in das Band oder die Tafel gelocht wird. Dadurch lässt sich eine runde, quadratische oder andersartige Lochform mit in Durchgangsrichtung geraden Lochflanken realisieren.

In der US 683 793 A wird die Herstellung einer Sattelstütze für ein Fahrrad offenbart, bei der in ein ausgestanztes Blechteil zwei Öffnungen eingebracht und diese anschließend mittels eines Schlitzes verbunden werden. Nachfolgend wird das Schlitzblech durch eine geeignete Form in einer Stanze oder Presse partiell angehoben.

Die CH 655 256 A5 beschreibt ein Verfahren zur Herstellung von Raspelscheiben für Küchengeräte, bei welchem Löcher an einer Schreibe ausgestanzt, durch Herausdrücken etwa der Hälfte des Lochrandes jeweils Muscheln aufgestellt und die Muscheln von innen mittels eines Schabestempels angeschärft werden.

In der US 2010/126152 A1 wird die Fertigung eines Metallbleches für einen Trägerkörper eines Katalysators zur Reinigung von Fahrzeugabgasen beschrieben, bei der in das ebene Metallblech Schlitze und jeweils beidseitige Öffnungen in den Randbereichen senkrecht eingebracht werden, anschließend eine Wellenstruktur in das Metallblech geformt wird, Mikrostrukturen durch Hochbiegen des Bleches angrenzend an den Schlitzen gefertigt werden und abschließend die Wellenstruktur gestaucht wird.

Die GB 1094610 A offenbart einen Streifen mit einer Reihe von Vorsprüngen abwechselnd auf jeder Seite, welcher anschließend zu einem Spaltring zur Kopplung von zwei rotierenden Bauteilen geformt wird. Die beidseitigen Vorsprünge als Laschenabschnitte sind gefertigt durch senkrechtes Durchstechen von beidseitigen Öffnungen durch den horizontal ausgerichteten Streifen, Einschnitt eines Querschlitzes zwischen den beiden Öffnungen und Hochbiegen der Laschenabschnitte zwischen den jeweiligen Öffnungen.

Des Weiteren sind Schlitzlochbleche und Feinlochbleche bekannt, wobei letztere beispielsweise mit dreieckigen oder halbelliptischen Öffnungen ausgebildet sein können. Bei den bekannten Lochblechen und insbesondere bei Feinlochblechen, bei denen die Lochweite deutlich geringer als die Blechdicke ist, treten an den Innenkanten und/oder Innenecken des Loches zum massiven Blech Probleme dadurch auf, dass es in diesen Bereichen zu Anreicherungen von Bakterien und/oder anorganischen und organischen Stoffen kommt. Diese Verkrustungen und Ansammlungen von Bakterien führen zu hygienischen Problemen und Beanstandungen insbesondere beim Einsatz solcher Lochbleche zur Aufbereitung in der Lebensmittel- und/oder Pharmaindustrie.

Aufgabe der Erfindung ist es, den Stand der Technik zu verbessern.

Gelöst wird die Aufgabe durch ein Verfahren zum Herstellen eines Lochbleches, wobei das hergestellte Lochblech mindestens ein Loch aufweist, mit folgenden Schritten
- Einbringen von zwei beabstandeten Bohrungen in ein Blech, wobei die Bohrungen durch eine Dicke des Bleches durchgehend ausgebildet sind,
- Einbringen eines durchgehenden Schnittes zwischen den beiden beabstandeten Bohrungen in das Blech, und
- Aufbiegen eines am durchgehenden Schnitt anliegenden Blechabschnittes derart, dass ein Loch ausgebildet wird,
wobei das Einbringen der Bohrungen in einem Winkel in einem Bereich von 30° bis 60° zu einer horizontalen Ausrichtung des Bleches erfolgt.

Durch das erfindungsgemäße Verfahren wird ein Lochblech bereitgestellt, bei dem das Loch stärker als im Vergleich zum Stand der Technik durchströmt wird. Dadurch, dass beim Einbringen der Bohrungen als Anfang- und Endbereich des späteren Loches in dem massiven Blech eine definierte Oberfläche gefertigt wird, wird diese verstärkt durchströmt und/oder umströmt und somit eine Ansammlung von Bakterien, anorganischen und/oder organischen Stoffen an den durch die Bohrungen ausgebildeten, entsprechenden Kanten- und Eckbereichen des Loches verhindert.

Es ist besonders vorteilhaft, dass die Form und Größe der Bohrung an die Form und Größe des am durchgehenden Schnitt anliegenden Blechabschnittes angepasst wird, wobei letzterer entsprechend aufgebogen wird. Da das Aufbiegen des Blechabschnittes sowohl in vertikaler Richtung als auch in horizontaler Richtung bezogen auf die Abmessungen des Bleches definiert durchführbar ist, ist dadurch die Form des Loches in Relation zur Form der Bohrungen festlegbar und beide können derart ausgebildet werden, dass sowohl die Bereiche der Bohrungen als auch das Loch selbst optimal durchströmt werden. Folglich werden laminare Strömungsbereiche beim Durchgang eines Fluides und/oder von Partikeln durch das Loch auch in den Eck- und Randbereichen des Loches vermieden.

Es ist weiterhin besonders vorteilhaft, dass die Ausrichtung und/oder Form des Loches mit seinen beiden Öffnungen sowie die Anordnung des Loches auf dem Blech flexibel und frei fertigbar sind. Zum einen sind die Ober- und Unterseite des Lochbleches durch das Aufbiegen unterschiedlich ausbildbar. Beispielsweise kann die Unterseite des Lochbleches glatt mit einer glatten unteren Öffnung des Loches ausgeführt sein, während auf der Oberseite des Bleches der aufgebogene Blechabschnitt und die obere Öffnung des Loches über die Blechdicke hinausstehen. Zudem kann die obere Öffnung des Loches beispielsweise in ihrer Ausgangsrichtung horizontal und somit parallel zur horizontalen Ausrichtung des Bleches gerichtet sein. Der aufgebogene Blechabschnitt kann beispielsweise auf der Oberseite aber auch direkt eine gerade Öffnung nach oben aufweisen.

Somit wird durch die zwei beabstandeten Bohrungen die Lochweite in horizontaler Ausrichtung des Bleches festgelegt, während durch das Aufbiegen des am durchgehenden Schlitz anliegenden Blechabschnittes vor allem die vertikale Ausdehnung des Loches ausgeführt wird.

Ein wesentlicher Gedanke der Erfindung beruht darauf, durch Einbringen von Bohrungen mit einer definierten Form und Oberfläche die inneren Kanten des Loches derart auszugestalten, dass auch in den Eck- und/oder Randbereichen eine optimale Durchströmung des Loches erfolgt und dadurch eine Ansammlung von Bakterien, anorganischen und/oder organischen Stoffen verhindert wird. Zudem kann durch die Bohrungen ein Ausreißen oder Ausfasern von Rissen vermieden werden, sodass sich in diesen Rissen keine Bakterien ansammeln können.

### Folgendes Begriffliche sei erläutert:

Ein "Lochblech" (auch "Lochplatte" genannt) ist insbesondere ein Blech, welches durch seine Blechdicke durchgehende Löcher aufweist. Die Löcher sind insbesondere in einer regelmäßigen Anordnung in das Blech eingebracht. Ein Lochblech umfasst auch Lochplatten nach DIN 4185-2 und 24041, nach welchen mit einer Lochplatte eine Platte bezeichnet wird, die durch Stanzen, Perforieren oder Bohren gleichartige Öffnungen in regelmäßigen Anordnungen erhält. Unter einem Lochblech wird insbesondere auch ein Blech verstanden, welches in Durchgangsrichtung schräge, gebogene oder konisch geformte Lochflanken aufweist. Somit kann sich die Lochweite in Durchgangsrichtung stetig oder unstetig verengen oder aufweiten. Das Lochblech weist insbesondere voneinander unterschiedliche Ober- und Unterseiten auf. Insbesondere ist der aufgebogene Bereich des Blechabschnittes und somit die entsprechende Lochflanke nur auf der Ober- oder Unterseite des Lochbleches angeordnet. Bevorzugt sind bei einem Lochblech mit mehreren Löchern alle gebogenen Blechabschnitte zur Ausbildung des Loches auf einer Seite des Bleches angeordnet. Beispielsweise können die aufgebogenen Blechabschnitte jedoch in regelmäßiger Verteilung auch jeweils abwechselnd auf der Ober- oder Unterseite des Lochbleches abstehen. Besonders bevorzugt sind die aufgebogenen Blechabschnitte zum Ausbilden der jeweiligen Löcher auf der Produktseite des Lochbleches angeordnet, welches in einem industriellen Produktionsprozess eingesetzt wird, und stehen beispielsweise schuppen- oder halbkreisförmig oberhalb der Blechdicke ab.

Das Lochblech weist insbesondere eine Lochblechdicke in einem Bereich von 0,2 mm bis 5,0 mm auf. Bevorzugt ist die Blechdicke deutlich größer als die Lochweite, sodass ein entsprechendes Feinlochblech herstellbar ist.

Das Lochblech weist insbesondere unlegierten Stahl, Duplex-Stahl, Edelstahl, Nickelstahl mit weiteren Nickellegierungen, Aluminium, Silber, Tantal, Niob und/oder andere Werkstoffe auf.

Um die Durchströmung der Bohrungen und des Loches weiter zu verbessern, kann nach dem Aufbiegen des Loches das Lochblech mittels einer Oberflächennachbehandlung verfestigt und die Oberfläche weiter geglättet werden. Eine solche Nachbehandlung kann beispielsweise mittels Elektropolieren erfolgen.

Unter einem "Loch" wird insbesondere eine durch die Dicke eines Lochbleches und/oder eines Bleches durchgehende Öffnung verstanden. Das Loch kann insbesondere eine beliebige Querschnittsfläche aufweisen und/oder die Lochweite kann sich in Durchgangsrichtung verändern. Insbesondere weist ein Loch eine runde Querschnittsform auf. Das Loch weist insbesondere einen Durchmesser (Lochweite) in einem Bereich von 0,03 mm bis 8,00 mm, bevorzugt von 0,10 mm bis 3,00 mm, auf.

Ein "Blech" ist insbesondere ein Walzerzeugnis aus Metall, dessen Breite und Länge sehr viel größer als dessen Dicke sind. Bei einem Blech handelt es sich insbesondere um eine Tafel, Platte, ein Band und/oder Coil (aufgewickeltes Metallband). Ein Blech weist insbesondere eine Blechdicke und einen Werkstoff auf, welcher den Anforderungen des herzustellenden Lochbleches entspricht. Somit weist ein Blech insbesondere die oben für ein Lochblech genannten Blechdicke und Werkstoffe auf. Bei einem Blech handelt es sich insbesondere um ein Feinblech mit einer Blechdicke < 3,0 mm, einem Mittelblech mit einer Blechdicke in einem Bereich von 3,0 mm bis ≤ 4,75 mm oder ein Grobblech mit einer Dicke größer 4,75 mm.

Eine "Bohrung" ist insbesondere ein durchgehender Durchbruch durch eine Dicke des Bleches. Die Bohrung weist insbesondere einen runden Querschnitt auf. Selbstverständlich kann die Bohrung auch jede andere Form als Querschnitt aufweisen. Die Bohrung hat insbesondere einen Durchmesser in einem Bereich von 0,01 - 4,00 mm.

Die Bohrung wird insbesondere in das Blech mittels eines Bohrers, Bohrerrodierers, Stanzers, Wasserstrahlbohrers und/oder mittels Laserbohrung eingebracht.

Bei einem "durchgehenden Schnitt" handelt es sich insbesondere um einen länglichen durchgehenden Durchbruch durch die Dicke des Bleches. Der durchgehende Schnitt endet insbesondere in horizontaler Richtung in den beiden beabstandeten Bohrungen. Bei einem durchgehenden Schnitt kann es sich auch um einen durchgehenden Einschnitt, eine durchgehende Nut und/oder einen durchgehenden Schlitz durch die Blechdicke handeln.

Unter einem "am durchgehenden Schnitt anliegenden Blechabschnitt" wird insbesondere der Bereich des Bleches verstanden, welcher bei Draufsicht auf das Blech an einer der beiden Längsseiten des Schnittes angrenzt.

Unter einem "Aufbiegen" wird insbesondere verstanden, dass mindestens einer der beiden am durchgehenden Schnitt anliegenden Blechabschnitte hochgebogen wird, sodass sich ein Loch mit einer speziellen Form ausbildet. Durch das Aufbiegen des Blechabschnittes oder beider am Schnitt anliegender Blechabschnitte wird der Blechabschnitt oder die Blechabschnitte insbesondere in eine bestimmte Form gebogen. Hierbei wird der Blechabschnitt insbesondere gleichzeitig oder nacheinander sowohl in horizontaler als auch in vertikaler Richtung bezogen auf ein liegendes Blech gebogen. Insbesondere wird der anliegende Blechabschnitt derart aufgebogen, dass sich auf einer Seite des Bleches und/oder Lochbleches eine dreieckige, halbkreisförmige, halbelliptische oder andersartig gebogene Öffnung ausbildet. Das Aufbiegen wird beispielsweise mittels eines Stempels oder Biegewerkzeuges in einer Presse oder Biegemaschine durchgeführt. Beim Aufbiegen kann es sich auch um ein Gesenkbiegen, Walzbiegen oder freies Biegen handeln.

In einer weiteren Ausgestaltungsform des Verfahrens erfolgt ein Einbringen von weiteren beabstandeten Bohrungen und weiteren durchgehenden Schnitten an unterschiedlichen Positionen des Bleches und ein Aufbiegen zum Ausbilden von weiteren Löchern.

Somit kann ein Lochblech mit einer Vielzahl von Löchern gefertigt werden. Hierbei ist es herstellungstechnisch vorteilhaft, dass zunächst alle Bohrungen eingebracht, anschließend alle Schnitte durchgeführt und darauffolgend ein Aufbiegen der jeweils anliegenden Blechabschnitte an den entsprechenden durchgehenden Schnitten erfolgt, sodass ein Werkzeugwechsel minimiert wird.

Beim Ausbilden von einer Vielzahl von Löchern ist es insbesondere vorteilhaft, wenn eine gleichmäßige Verteilung der Löcher über die Fläche des Bleches erfolgt, sodass je nach Anforderung unterschiedliche Lochteilungen und Vorschübe eingestellt werden können. Hierbei bestimmen die kleinsten Maße für die Lochteilung und den Vorschub insbesondere die maximale offene Fläche des Lochbleches. Die offene Fläche als Verhältnis der Fläche der Öffnungen auf einer Blechseite zur Gesamtfläche des Bleches auf dieser Blechseite beträgt insbesondere 1,0% bis 40,0%, bevorzugt 10,0% bis 30,0%. Zudem ist durch die Anzahl der Löcher im Lochblech ein Druckverlust entsprechend den jeweiligen Anwendungsbedingungen einstellbar.

Die "weiteren Bohrungen" entsprechen der oben definierten Bohrung, die "weiteren durchgehenden Schnitte" entsprechen dem oben definierten durchgehenden Schnitt und die "weiteren Löcher" entsprechen dem oben definierten Loch.

Um eine hohe Maßgenauigkeit und hohe Oberflächenqualität zu erzielen, erfolgt das Einbringen der Bohrungen und/oder des Schnittes oder der Schnitte mittels einer Strahlquelleinheit.

Somit können die Bohrungen und/oder Schnitte mittels Wasserstrahlen und/oder Laserstrahlen eingebracht werden.

Bei einer "Strahlquelleinheit" handelt es sich insbesondere um eine Maschine zum Wasserstrahlschneiden, Laserstrahlschmelzschneiden, Brennschneiden und/oder Plasma-Schmelzschneiden.

In einer weiteren Ausführungsform des Verfahrens erfolgt das Einbringen der Bohrungen in einem Winkel in einem Bereich von 40° bis 50°, zu der horizontalen Ausrichtung des Bleches.

Dadurch werden vorteilhaft schrägverlaufende Lochflanken durch Einbringen der Bohrungen in Bezug zu einem liegenden Blech ausgebildet und die Strömung beim Durchtritt durch das Loch sowohl an der Eingangsöffnung als auch an der Ausgangsöffnung des Loches optimal geführt. Zudem kann beispielsweise an einer oberen Lochkante des aufgebogenen Blechabschnittes ein optimaler Strömungsabriss an der oberen Öffnung des Loches erfolgen.

Ein "Winkel" (auch "Bohrwinkel" genannt) bezieht sich insbesondere auf eine horizontale Ausrichtung des Bleches, beispielsweise auf die Unter- oder Oberkante eines liegenden Bleches.

Um im Bereich der Bohrungen eine stärkere Durchströmung gezielt einzustellen, erfolgt das Einbringen der Bohrungen jeweils mit einem größeren Bohrdurchmesser als eine Schnittbreite des zugehörigen Schnittes.

Die "Schnittbreite" ist insbesondere die Ausdehnung des Schnittes quer zur Längsrichtung des Schnittes.

In einer weiteren Ausgestaltungsform des Verfahrens erfolgt das Einbringen der jeweils zwei beabstandeten Bohrungen und somit das Ausbilden der Löcher mit einer bestimmten Anordnung über einer Fläche des Bleches, insbesondere in Form einer Spirale und/oder von Segmentbögen.

Dadurch, dass die paarweisen Bohrungen und somit die ausgebildeten Löcher mit einer vorgegebenen Anordnung über der Fläche des Bleches verteilt und eingebracht werden, werden spezifische Strömungen durch die Löcher des gefertigten Lochbleches und/oder gerichtete Anströmungen innerhalb einer Aufbereitungsvorrichtung realisiert. Zudem kann dadurch das Lochblech vordefinierte Bereiche mit einer niedrigen und/oder hohen Strömung sowie lokale Strömungen und/oder einen Strömungsgradient über die Fläche des Bleches bei dessen Verwendung aufweisen.

Um beim Einsatz des gefertigten Lochbleches einen Austritt der Strömung in eine bestimmte Richtung zu erhalten, erfolgt das Einbringen des durchgehenden Schnittes oder der durchgehenden Schnitte in einem Winkel von 10° bis 170°, insbesondere von 30° bis 150°, bevorzugt von 50° bis 130° zu einer oder der horizontalen Ausrichtung des Bleches.

Dadurch können die durchgehenden Schnitte und somit die ausgebildeten Löcher verschiedene und/oder gleiche Winkel mit einer bestimmten Ausrichtung zur horizontalen Oberfläche des Bleches aufweisen, sodass bei der Verwendung des gefertigten Lochbleches gezielt gerichtete Strömungen, beispielsweise radiale Strömungen, erzeugt werden. Somit können sich die gefertigten Löcher beispielsweise mit jeweils einem Winkel von 60° von der horizontalen Oberfläche des Bleches abwechselnd zu entgegengesetzten Richtungen öffnen.

In einem weiteren Aspekt der Erfindung wird die Aufgabe gelöst durch ein Lochblech, welches insbesondere nach einem zuvor beschriebenen Verfahren hergestellt ist, wobei das Lochblech mindestens ein Loch aufweist und das mindestens eine Loch einen aufgebogenen anliegenden Blechabschnitt auf einer Oberseite oder Unterseite des Lochbleches aufweist, und das Lochblech jeweils zwei Bohrungen eingebracht in einem Winkel in einem Bereich von 30° bis 60° zu einer horizontalen Ausrichtung des Lochbleches einen Anfangs- und Endbereich des mindestens einen Loches ausbilden.

Somit wird ein Lochblech bereitgestellt, bei dem die äußeren Ecken und/oder Kanten des Loches, welche an das massive Blech des Lochbleches angrenzen, derart ausgeführt sind, dass aufgrund einer optimalen Durchströmung der entsprechenden Eck- und/oder Kantenbereiche des Loches ein Ansammeln von Bakterien, organischen und/oder anorganischen Stoffen verhindert wird. Somit ist das hergestellte Lochblech auch in hygienisch relevanten Bereichen, wie beispielsweise in der Pharma- und/oder Lebensmittelindustrie, einsetzbar.

In einem zusätzlichen Aspekt der Erfindung wird die Aufgabe gelöst durch ein Formteil, welches unter Fügen und/oder Umformen eines zuvor beschriebenen Lochbleches gefertigt ist.

Somit ist als Formteil beispielsweise ein aus mehreren Lochblechen gefügter Anströmboden für eine Fließbettanlage oder ein zu einen Filterelement umgeformtes Lochblech herstellbar. Folglich ist aufgrund der besseren Durchströmung des Formteils eine geringere Wartung und Reinigung des Formteils notwendig. Insbesondere kann das Formteil auch in hygienisch relevanten Bereichen und/oder Anlagen eingesetzt werden, wie beispielsweise für die Produktion von Milchpulver für Babynahrung.

Unter "Fügen" wird insbesondere eine Fertigungstechnik zum Verbinden des Lochbleches mit sich selbst, beispielsweise zu einer zylindrischen Form, mit einem oder mehreren weiteren Lochblechen oder anderen Bauteilen verstanden. Unter Fügen wird prinzipiell verstanden, dass zwei oder mehr feste Körper mit geometrisch bestimmter Gestalt dauerhaft verbunden werden. Fügen umfasst insbesondere alle unter DIN 8593 bestimmten Verfahrensgruppen. Zum Fügen zählt insbesondere Schweißen, Löten, Kleben, Nieten und/oder Schrauben.

Unter "Umformen" wird insbesondere ein Verfahren verstanden, bei dem das Lochblech gezielt in eine andere Form gebracht wird. Das Umformen selbst findet insbesondere ohne Entfernen von Material von dem Lochblech statt. Unter Umformen fällt insbesondere das Walzen, Freiformschmieden, Gesenkschmieden, Pressen, Tiefziehen und/oder Biegen.

In einem weiteren Aspekt der Erfindung wird die Aufgabe gelöst durch eine Aufbereitungsvorrichtung, insbesondere eine Fließbettvorrichtung, wobei die Aufbereitungsvorrichtung ein zuvor beschriebenes Lochblech und/oder ein zuvor beschriebenes Formteil aufweist.

Folglich ist durch Verwenden des erfindungsgemäßen Lochbleches und/oder des erfindungsgemäßen Formteiles eine schnellere Durchströmung und effizientere Aufbereitung in einer Aufbereitungsvorrichtung erreichbar.

Zudem wird durch die bessere Durchströmung des Formteils und/oder Lochbleches ein intensiverer Wärme- und/oder Stoffaustausch bei chemischen und/oder physikalischen Prozessen erreicht, sodass die chemische und/oder physikalische Umsetzung schneller erzielt und/oder die entsprechende Anlage kleiner dimensioniert werden kann.

Bei einer "Aufbereitungsvorrichtung" (auch "Aufbereitungsanlage") handelt es sich insbesondere um jegliche Vorrichtung oder Anlage, in welcher ein Stoff, ein Halbprodukt oder ein Produkt chemisch und/oder physikalisch verändert und somit aufbereitet wird. Bei einer Aufbereitungsvorrichtung kann es sich beispielsweise um eine Filter-, Sieb-, Zentrifugen-, Entwässerungs-, Trenn-, Trocknungs- und/oder Kühlanlage handeln.

Im Weiteren wird die Erfindung anhand von Ausführungsbeispielen näher erläutert. Es zeigen
- Figur 1: eine stark schematische Darstellung eines Bleches in Draufsicht mit Bohrungen und durchgehenden Schnitten,
- Figur 2: eine stark schematische Schnittdarstellung eines Lochbleches in Seitenansicht, und
- Figur 3: eine stark schematische Schnittdarstellung eines Ausschnittes eines Lochbleches mit einem Loch in Längsschnitt.

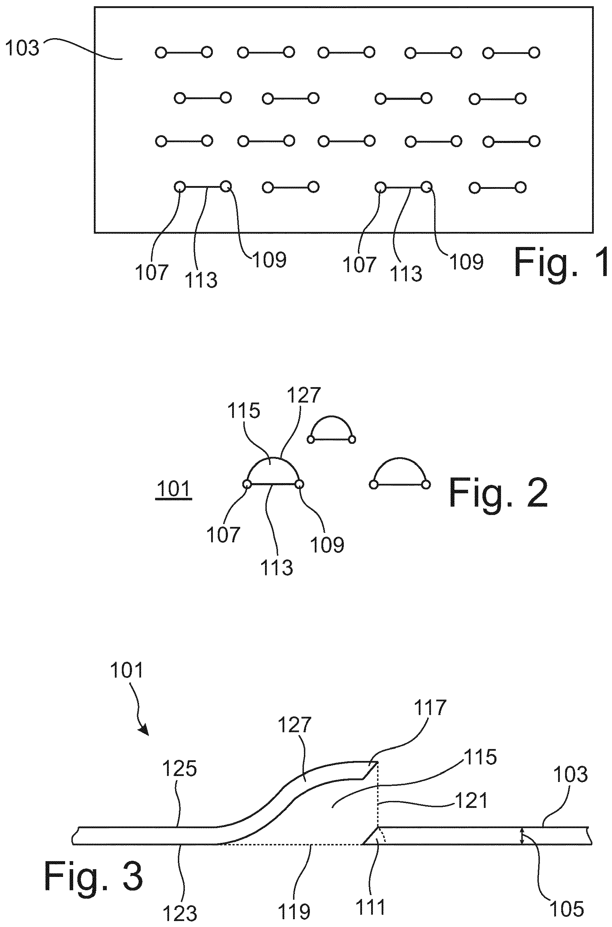

Ein Blech 103 weist eine Unterseite 123, eine Oberseite 125 und eine Blechdicke 105 auf. Zum Fertigen eines Lochbleches 101 werden auf dem Blech 103 (gezeigt in Figur 1 in Draufsicht) verteilt eine Vielzahl von Bohrungen mittels eines Bohrers eingebracht, wobei jeweils eine erste Bohrung 107 definiert beabstandet zu einer zweiten Bohrung 109 angeordnet ist. Die jeweils erste Bohrung 107 und die zweite Bohrung 109 werden mit einem Bohrwinkel 111 von 45° zur Unterkante des Bleches 103 eingebracht und gehen vollständig durch eine Blechdicke 105 des Bleches 103 hindurch. Die jeweils erste Bohrung 107 und die zweite Bohrung 109 weisen einen runden Querschnitt auf.

Anschließend werden jeweils die beabstandete erste Bohrung 107 und die zweite Bohrung 109 mittels jeweils eines Schnittes 113 verbunden, wobei jeder Schnitt 113 vollständig durch die Blechdicke 105 durchgeht. Hierbei werden alle Schnitte 113 mit einem Laserstrahlschneider in das Blech 103 eingebracht. Alle ersten Bohrungen 107 und alle zweiten Bohrungen 109 weisen einen Bohrdurchmesser von 3,0 mm auf, während alle Schnitte 113 eine Schnittbreite von 1,5 mm aufweisen.

Nach Ausführen aller Schnitte 113 werden nacheinander alle an einer selben Längsseite der Schnitte 113 anliegenden Blechabschnitte 127 nach oben durch Einwirken eines Stempels von der Unterseite 123 hoch gebogen, sodass ein Loch 115 mit einer unteren Öffnung 119 und einer horizontal zur Ausrichtung des Bleches 103 ausgerichteten oberen Öffnung 121 entstanden ist. Dadurch liegt an der Oberseite 125 des Bleches 103 (siehe Figur 3) eine strukturierte Oberfläche und an der Unterseite 123 des Bleches 103 eine glatte Unterseite mit bündiger unterer Öffnung 119 vor. Weitere Löcher werden entsprechend ausgeformt, bis das Lochblech 101 mit gewünschter Anzahl an Löchern 115 vorliegt.

Durch den Bohrwinkels 111 von 45° bildet sich eine schräge Lochkante 117 an jedem Loch 115, welche aufgrund ihrer schrägen Ausführung einen optimalen Strömungsabriss bei einem Durchgang eines Fluids von der unteren Öffnung 119 zur oberen Öffnung 121 jedes Loches 115 bewirkt.

Das gefertigte Lochblech 101 wird als Anströmboden zur Gasverteilung in einer nicht gezeigten Fließbettanlage zum Trocknen von Milchpulver eingesetzt. Hierbei wird das Trocknungsgas auf der Unterseite 123 des Lochbleches 101 zugeführt und strömt durch das jeweilige Loch 115 des Lochbleches 101 im Wesentlichen horizontal aus der jeweiligen oberen Öffnung 121 des Loches 115 aus. Durch die Ausführung des Lochbleches 101 mit den oberen gebogenen Blechabschnitten 127 und den horizontal ausgerichteten oberen Öffnungen 121 der Löcher 115 wird zum einen ein direkter Eintritt und ein Sedimentieren von Milchpulver senkrecht von oben in das jeweilige Loch 115 vermieden. Zum anderen wird durch die durch die Bohrungen 107 und 109 definiert ausgeführten Lochflanken eine Anreicherung von Bakterien und/oder Milchpulver verhindert. Folglich werden durch das erfindungsgemäße Lochblech 101 hygienisch relevante Kontaminationen vermieden.

### Bezugszeichenliste

- 101: Lochblech
- 103: Blech
- 105: Blechdicke
- 107: erste Bohrung
- 109: zweite Bohrung
- 111: Bohrwinkel
- 113: Schnitt
- 115: Loch
- 117: Lochkante
- 119: untere Öffnung
- 121: obere Öffnung
- 123: Unterseite des Bleches
- 125: Oberseite des Bleches
- 127: Blechabschnitt

## Patentansprüche

1. Verfahren zum Herstellen eines Lochbleches (101), wobei das hergestellte Lochblech mindestens ein Loch (115) aufweist, mit folgenden Schritten
- Einbringen von zwei beabstandeten Bohrungen (107, 109) in ein Blech (103), wobei die Bohrungen durch eine Dicke (105) des Bleches durchgehend ausgebildet sind,
- Einbringen eines durchgehenden Schnittes (113) zwischen den beiden beabstandeten Bohrungen in das Blech, und
- Aufbiegen eines am durchgehenden Schnitt anliegenden Blechabschnittes (127) derart, dass ein Loch ausgebildet wird,
**dadurch gekennzeichnet, dass** das Einbringen der Bohrungen (107, 109) in einem Winkel (111) in einem Bereich von 30° bis 60° zu einer horizontalen Ausrichtung des Bleches erfolgt.

2. Verfahren nach Anspruch 1, **dadurch gekennzeichnet, dass** ein Einbringen von weiteren beabstandeten Bohrungen und weiteren durchgehenden Schnitten an unterschiedlichen Positionen des Bleches und ein Aufbiegen zum Ausbilden von weiteren Löchern erfolgt.

3. Verfahren nach einem der vorherigen Ansprüche, **dadurch gekennzeichnet, dass** das Einbringen der Bohrungen und/oder des Schnittes oder der Schnitte mittels einer Strahlquelleinheit erfolgt.

4. Verfahren nach einem der vorherigen Ansprüche, **dadurch gekennzeichnet, dass** das Einbringen der Bohrungen in dem Winkel (111) in einem Bereich von 40° bis 50° zu der horizontalen Ausrichtung des Bleches erfolgt.

5. Verfahren nach einem der vorherigen Ansprüche, **dadurch gekennzeichnet, dass** das Einbringen der Bohrungen jeweils mit einem größeren Bohrdurchmesser als eine Schnittbreite des zugehörigen Schnittes erfolgt.

6. Verfahren nach einem der Ansprüche 1 bis 5, **dadurch gekennzeichnet, dass** das Einbringen der jeweils zwei beabstandeten Bohrungen und somit das Ausbilden der Löcher mit einer bestimmten Anordnung über einer Fläche des Bleches, insbesondere in Form einer Spirale und/oder von Segmentbögen, erfolgt.

7. Verfahren nach einem der vorherigen Ansprüche, **dadurch gekennzeichnet, dass** das Einbringen des durchgehenden Schnittes oder der durchgehenden Schnitte in einem Winkel von 10° bis 170°, insbesondere von 30° bis 150°, bevorzugt von 50° bis 130° zu einer oder der horizontalen Ausrichtung des Bleches erfolgt.

8. Lochblech (101), wobei das Lochblech mindestens ein Loch (115) aufweist und das mindestens eine Loch einen aufgebogenen anliegenden Blechabschnitt auf einer Oberseite oder Unterseite des Lochbleches aufweist, **dadurch gekennzeichnet, dass** jeweils zwei Bohrungen (107, 109) eingebracht in einem Winkel (111) in einem Bereich von 30° bis 60° zu einer horizontalen Ausrichtung des Lochbleches (101) einen Anfangs- und Endbereich des mindestens einen Loches ausbilden.

9. Formteil, welches unter Fügen und/oder Umformen eines Lochbleches (101) nach Anspruch 8 gefertigt ist, sodass das Formteil das Lochblech (101) aufweist.

10. Aufbereitungsvorrichtung, insbesondere eine Fließbettvorrichtung, wobei die Aufbereitungsvorrichtung ein Lochblech (101) nach Anspruch 8 und/oder ein Formteil nach Anspruch 9 aufweist.

## Claims

1. A method for producing a perforated plate (101), wherein the produced perforated plate has at least one hole (115), said method having the following steps
- making two spaced-apart bores (107, 109) in a plate (103), wherein the bores are formed continuously through a thickness (105) of the plate,
- making a continuous cut (113) between the two spaced-apart bores in the plate, and
- bending up a plate portion (127) adjacent to the continuous cut, in such a way that a hole is formed,
**characterised in that** the bores (107, 109) are formed at an angle (111) in a range of from 30° to 60° to a horizontal alignment of the plate.

2. The method according to claim 1, **characterised in that**
further spaced-apart bores and further continuous cuts are made at different positions of the plate and the plate is bent up to form further holes.

3. The method according to any one of the preceding claims, **characterised in that** the bores and/or the cut or the cuts are/is made by means of a beam source unit.

4. The method according to any one of the preceding claims, **characterised in that** the bores are made at the angle (111) in a range of from 40° to 50° to the horizontal alignment of the plate.

5. The method according to any one of the preceding claims, **characterised in that** the bores are each made with a larger bore diameter than a cut width of the associated cut.

6. The method according to any one of claims 1 to 5, **characterised in that** each two spaced-apart bores are made, and therefore the holes are formed, with a specific arrangement over an area of the plate, in particular in the form of a spiral and/or segment arcs.

7. The method according to any one of the preceding claims, **characterised in that** the continuous cut or the continuous cuts is/are made at an angle of from 10° to 170°, in particular from 30° to 150°, preferably from 50° to 130° to a or the horizontal alignment of the plate.

8. A perforated plate (101), wherein the perforated plate has at least one hole (115) and the at least one hole has a bent-up, adjacent plate portion on an upper side or underside of the perforated plate, **characterised in that**
each two bores (107, 109) made at an angle (11) in a range of from 30° to 60° to a horizontal alignment of the perforated plate (101) form a start and end region of the at least one hole.

9. A moulded part which is manufactured by joining and/or reshaping a perforated plate (101) according to claim 8, so that the moulded part comprises the perforated plate (101).

10. A preparation device, in particular a fluidised bed device, wherein the preparation device comprises a perforated plate (101) according to claim 8 and/or a moulded part according to claim 9.

## Revendications

1. Procédé de fabrication d'une tôle perforée (101), la tôle perforée fabriquée présentant au moins une perforation (115), avec les étapes suivantes :
- la réalisation de deux perçages espacés (107, 109) dans une tôle (103), les perçages étant formés de manière continue à travers une épaisseur (105) de la tôle,
- la réalisation d'une découpe continue (113) dans la tôle entre les deux perçages espacés, et
- le pliage d'une section de tôle (127) adjacente à la découpe continue de telle sorte qu'une perforation est formée,
**caractérisé en ce que** la réalisation des perçages (107, 109) est effectuée selon un angle (111) dans une plage de 30° à 60° par rapport à une orientation horizontale de la tôle.

2. Procédé selon la revendication 1, **caractérisé en ce qu'**on effectue une réalisation d'autres perçages espacés et d'autres découpes continues à différentes positions de la tôle et un pliage pour former d'autres perforations.

3. Procédé selon l'une quelconque des revendications précédentes, **caractérisé en ce que** la réalisation des perçages et/ou de la découpe ou des découpes est effectuée au moyen d'une unité de source de rayonnement.

4. Procédé selon l'une quelconque des revendications précédentes, **caractérisé en ce que** la réalisation des perçages est effectuée selon l'angle (111) dans une plage de 40° à 50° par rapport à l'orientation horizontale de la tôle.

5. Procédé selon l'une quelconque des revendications précédentes, **caractérisé en ce que** la réalisation des perçages est effectuée à chaque fois avec un diamètre de perçage supérieur à la largeur de découpe de la découpe correspondante.

6. Procédé selon l'une quelconque des revendications 1 à 5, **caractérisé en ce que** la réalisation de chacun des deux perçages espacés et donc la formation des perforations est effectuée selon un agencement déterminé sur une surface de la tôle, notamment sous la forme d'une spirale et/ou d'arcs segmentaires.

7. Procédé selon l'une quelconque des revendications précédentes, **caractérisé en ce que** la réalisation de la découpe continue ou des découpes continues est effectuée selon un angle de 10° à 170°, notamment de 30° à 150°, de préférence de 50° à 130° par rapport à une ou à l'orientation horizontale de la tôle.

8. Tôle perforée (101), la tôle perforée présentant au moins une perforation (115) et l'au moins une perforation présentant une section de tôle adjacente repliée sur un côté supérieur ou un côté inférieur de la tôle perforée, **caractérisée en ce qu'**à chaque fois deux perçages (107, 109) réalisés selon un angle (111) dans une plage de 30° à 60° par rapport à une orientation horizontale de la tôle perforée (101) forment une zone de début et de fin de l'au moins une perforation.

9. Pièce moulée, qui est produite en assemblant et/ou en déformant une tôle perforée (101) selon la revendication 8, de telle sorte que la pièce moulée présente la tôle perforée (101).

10. Dispositif de préparation, notamment dispositif à lit fluidisé, le dispositif de préparation présentant une tôle perforée (101) selon la revendication 8 et/ou une pièce moulée selon la revendication 9.
